(19) Europäisches Patentamt / European Patent Office / Office européen des brevets

(11) **EP 3 781 417 B1**

(12) # FASCICULE DE BREVET EUROPEEN

(45) Date de publication et mention de la délivrance du brevet:
**01.06.2022 Bulletin 2022/22**

(21) Numéro de dépôt: **19722935.4**

(22) Date de dépôt: **11.04.2019**

(51) Classification Internationale des Brevets (IPC):
*B60C 11/03* $^{(2006.01)}$    *B60C 11/00* $^{(2006.01)}$
*B60C 11/11* $^{(2006.01)}$    *B60C 9/18* $^{(2006.01)}$

(52) Classification Coopérative des Brevets (CPC):
**B60C 11/005; B60C 11/0075; B60C 11/0302;
B60C 11/11;** B60C 2009/1857; B60C 2011/0025;
B60C 2011/0033; B60C 2011/0313; B60C 2200/08

(86) Numéro de dépôt international:
**PCT/FR2019/050854**

(87) Numéro de publication internationale:
**WO 2019/202238 (24.10.2019 Gazette 2019/43)**

(54) **STRUCTURE DE BANDE DE ROULEMENT DE PNEU DE VEHICULE AGRICOLE**

LAUFFLÄCHENAUFBAU EINES REIFENS EINES LANDWIRTSCHAFTLICHEN FAHRZEUGS

TREAD STRUCTURE OF AN AGRICULTURAL VEHICLE TYRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.04.2018 FR 1853488**

(43) Date de publication de la demande:
**24.02.2021 Bulletin 2021/08**

(73) Titulaire: **COMPAGNIE GENERALE DES
ETABLISSEMENTS MICHELIN
63000 Clermont-Ferrand (FR)**

(72) Inventeurs:
- **CURAT, Alexandra
  63040 CLERMONT FERRAND Cedex 9 (FR)**
- **TRAN, Florence
  63040 CLERMONT-FERRAND Cedex 9 (FR)**
- **CABIOCH, Jean-Luc
  63040 CLERMONT-FERRAND Cedex 9 (FR)**
- **MONOD, Anthony
  63040 CLERMONT FERRAND Cedex 9 (FR)**
- **ANTON-ANTOLIN, Eduardo
  63040 CLERMONT FERRAND Cedex 9 (FR)**

(74) Mandataire: **Millanvois, Patrick Jacques Jean
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
EP-A1- 0 818 501    EP-A1- 3 141 402
WO-A1-2015/091731    FR-A1- 2 999 117
US-A- 5 411 067

**EP 3 781 417 B1**

## Description

*DOMAINE DE L'INVENTION*

La présente invention concerne un pneu destiné à équiper un véhicule agricole et plus particulièrement un pneu dont la résistance en roulage est améliorée.

Bien que non limitée à cette application, l'invention sera plus particulièrement décrite en référence à un véhicule agricole polyvalent c'est à dire un véhicule pouvant rouler aussi bien dans les champs en terrain meuble que sur route, tel qu'un tracteur agricole.

Un pneu pour véhicule agricole est destiné à rouler sur divers types de sols tels que la terre plus ou moins compacte des champs, les chemins non goudronnés d'accès aux champs et les surfaces goudronnées des routes. Compte tenu de cette diversité d'usage, en champ et sur route, un pneu pour tracteur agricole, et en particulier sa bande de roulement destinée à entrer en contact avec le sol, doit présenter un équilibre de performances notamment une traction appropriée lors du travail dans les champs, une bonne résistance aux arrachements de matière par roulage sur des corps agressifs. Par ailleurs, ces pneus doivent présenter une bonne résistance à l'usure sur route et en roulage sur trajectoire courbe, une faible résistance au roulement et un bon confort vibratoire.

Définitions :

Plan médian équatorial : plan perpendiculaire à l'axe de rotation et divisant le pneu en deux moitiés égales ou sensiblement égales.

Par direction radiale, on entend dans le présent document toute direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Par axialement ou radialement vers l'extérieur, il faut ici comprendre une direction qui est orientée vers l'extérieur de la cavité interne du pneu, cette dernière contenant l'air de gonflage du pneu.

Les conditions usuelles de roulage du pneu ou conditions d'utilisation sont celles qui sont définies notamment par la norme E.T.R.T.O. pour le marché européen, ou la norme T.R.A. pour le marché américain ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Un taux de creux surfacique pour une bande de roulement ou pour une région délimitée axialement sur une bande de roulement est défini comme le rapport entre la surface venant en contact avec une chaussée et la surface totale incluant à la fois la surface de contact et la surface des creux, ce rapport étant calculé soit pour toute la largeur de la bande de roulement soit pour la région limitée de la bande de roulement.

Les termes : module complexe, module élastique, module visqueux désignent, pour une personne du métier des élastomères, des propriétés dynamiques bien connues. Le module complexe d'un matériau, noté $G^*$, est défini par la relation suivante :

$$G^* = \sqrt{G'^2 + G''^2}$$

expression dans laquelle G' représente le module élastique et G" représente le module visqueux. L'angle de phase $\delta$, entre la force et le déplacement, traduit en perte dynamique tan $\delta$, est égal au rapport G"/G'.

Ces propriétés peuvent être mesurées sur des éprouvettes collées extraites d'une bande de roulement d'un pneu. On peut utiliser des éprouvettes telles que décrites dans la norme ASTM D 5992-96 (version publiée en septembre 2006). L'éprouvette employée est cylindrique de diamètre égal à 10 mm et de hauteur égale à 2 mm.

On soumet l'éprouvette à une sollicitation sinusoïdale en cisaillement simple alterné, à la fréquence de 10 Hz à contrainte imposée, symétriquement autour de sa position d'équilibre. Une accommodation de l'éprouvette est réalisée au préalable à la mesure de balayage en température. L'éprouvette est pour cela sollicitée en cisaillement sinusoïdal à 10 Hz, à 100% de déformation crête- crête à une température de 60°C.

La mesure en balayage en température est réalisée au cours d'une rampe de température croissante de 1.5°C par minute, en partant d'une température minimale inférieure à la température de transition vitreuse Tg du matériau jusqu'à une température maximale. Avant d'effectuer les mesures, l'éprouvette est stabilisée à la température minimale pendant au moins 20 mn. La température de transition vitreuse Tg est la température à laquelle la perte dynamique tan $\delta$ atteint un maximum lors du balayage en température.

Un pneu comprend, de façon générale, un sommet pourvu radialement à l'extérieur d'une bande roulement destinée à venir en contact avec le sol par l'intermédiaire d'une surface de roulement, deux bourrelets destinés à venir en contact avec une jante sur laquelle est monté le pneu et deux flancs reliant le sommet aux bourrelets. Un pneu pour véhicule agricole comprend une armature de carcasse, ancrée dans chaque bourrelet, usuellement composée d'au moins une couche d'éléments de renforcement de nature textile.

L'armature de carcasse est, de façon usuelle, surmontée radialement à l'extérieur par une armature de sommet composée d'une pluralité de couches dites couches de travail, chaque couche de travail étant constituée d'éléments de renforcement de nature textile ou métallique, ces éléments de renforcement étant enrobés dans un matériau élastomérique. Les éléments de renforcement sont en général croisés d'une couche à la suivante.

La bande de roulement, qui correspond à la partie du pneu destinée à venir en contact avec le sol en roulage, comprend une surface portante parallèle ou substantiellement parallèle à l'armature de sommet du pneu. Sur la surface portante de la bande de roulement et venant de matière sont moulées des rangées de barrettes principales qui s'étendent d'un bord de la bande de roulement jusqu'au plan médian équatorial. Ces barrettes principales sont disposées de chaque côté du plan médian équatorial du pneu de manière à former un motif en V (dit motif en chevron), la pointe du motif en V étant destinée à entrer la première dans le contact avec le sol. Les barrettes principales sont espacées entre elles pour former des sillons ou rainures ; la largeur de ces sillons est déterminée de façon à permettre un bon fonctionnement à la fois sur route et sur terrain meuble. Les barrettes principales présentent une symétrie par rapport au plan médian équatorial du pneumatique, avec le plus souvent un décalage circonférentiel entre les deux rangées de barrettes, similaire à celui obtenu par une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

Chaque barrette principale comprend une face de contact radialement à l'extérieur et des faces latérales prenant naissance sur la surface portante de la bande de roulement. Les faces latérales se rejoignent dans la partie médiane de la bande de roulement par au moins une face d'extrémité de la barrette principale. La face de contact radialement à l'extérieur est la seule face destinée à entrer en contact avec une route lors du roulage sur route. Lors du roulage sur terrain meuble, la bande de roulement vient en contact avec la terre sur cette face de contact radialement à l'extérieur et aussi avec les faces latérales et d'extrémité. Selon la nature du terrain et les conditions de pression et de charge du pneu, il se peut que même la surface portante vienne en contact avec le sol.

Dans la direction circonférentielle, une barrette principale s'étend sur une largeur moyenne mesurée comme la distance entre la face latérale d'attaque et la face latérale de fuite. La face latérale d'attaque ou face avant coupe la face de contact radialement à l'extérieur selon une arête, cette arête, dite arête d'attaque, entrant en premier en contact avec le sol. La face latérale de fuite ou face arrière coupe la face de contact radialement à l'extérieur selon une arête, cette arête, dite arête de fuite, entrant en contact avec le sol après l'arête d'attaque de la même barrette principale.

Une barrette s'étend usuellement selon un angle d'inclinaison moyen, par rapport à la direction axiale, proche de 45°. L'angle d'inclinaison moyen est égal à l'angle d'un segment de droite passant par les points d'extrémité respectivement axialement extérieur et intérieur de la ligne moyenne de la face de contact, cette ligne moyenne étant formée par l'ensemble des points de la face de contact situés à égale distance des bords d'attaque et de fuite.

Pour résoudre un problème rencontré lors de roulages sur des trajectoires curvilignes de petit rayon de courbure, il a été proposé d'intercaler, entre les barrettes principales et de chaque côté du plan équatorial, des barrettes secondaires de longueur inférieure à la longueur des barrettes principales. Ces barrettes secondaires ont, outre un rôle de protection de la surface portante de la bande de roulement, un effet réducteur sur le niveau des contraintes supportées par les barrettes principales en roulage. C'est le cas notamment des documents US 4383567, US 4534392. D'autres documents, tels US 5046541 et US 5411067, décrivent respectivement des barrettes longues (ou principales) discontinues et des barrettes courtes (ou additionnelles) pour améliorer de façon sensible la tenue à l'usure irrégulière qui peut survenir avec ce type de construction.

Cet écart de longueur permet de moduler le taux de creux surfacique de la bande de roulement dans la direction transversale.

*ÉTAT DE LA TECHNIQUE*

Si ces solutions présentent bien un intérêt pour améliorer la résistance de la bande de roulement en usure lors de roulage en courbe, l'évolution des conditions d'usage des véhicules agricoles nécessite une amélioration des performances de tels pneus.

La présente invention a pour objectif d'améliorer encore la résistance de la bande de roulement et celle du pneu lors des phases de roulage sur route et notamment lors de roulages sur des trajectoires courbes sans toutefois diminuer le niveau de performance en roulage sur terrains meubles.

*BREF EXPOSE DE L'INVENTION*

Cet objectif a été atteint selon l'invention par un pneu pour engin agricole comprenant une bande de roulement de largeur W surmontant une armature de sommet, cette dernière surmontant une armature de carcasse. La largeur W de la bande de roulement est déterminée entre des points axialement les plus à l'extérieur du profil externe de la bande de roulement. Lorsque le profil externe de la bande de roulement est sans discontinuité de pente, on prend pour limite axiale la région pour laquelle l'angle de la tangente au profil de la bande de roulement avec une direction parallèle à l'axe de rotation est égal à 30 degrés.

L'armature de sommet comprend une pluralité de couches de travail formée chacune par une pluralité de renforts orientés avec un même angle moyen par rapport à la direction circonférentielle et croisés d'une couche à la suivante.

Par ailleurs, la bande de roulement comprend une surface portante sur laquelle sont formées de chaque côté du plan médian équatorial une pluralité de barrettes principales, ces barrettes principales étant orientées selon un angle moyen, défini comme l'angle d'une droite passant par les points d'extrémité d'une barrette principale, cet angle moyen étant différent de zéro avec la direction axiale du pneu, ces barrettes principales étant disposées autour du pneu avec un pas moyen P et s'étendant d'un bord de la bande de roulement jusqu'au plan médian équatorial de manière à former un motif en V, la pointe de ce motif en V étant destinée à rentrer en premier dans le contact avec un sol pendant le roulage.

Ces barrettes principales s'étendent, de chaque côté du plan équatorial, axialement au-delà de l'extrémité axiale de la couche de travail de l'armature de sommet la plus large axialement. Chaque barrette principale a une hauteur Hp, une largeur minimale moyenne Ep définie comme la largeur moyenne sur la longueur de la barrette principale.

Cette bande de roulement comprend en outre de chaque côté du plan médian équatorial une pluralité de barrettes secondaires s'étendant dans la direction transversale entre une limite axiale externe de la bande de roulement et une largeur Ls mesurée par rapport au plan médian, cette largeur Ls étant comprise entre 40% et 60% de la demi largeur (W/2) de la bande de roulement ; chaque barrette secondaire est intercalée entre deux barrettes principales et a une largeur Es comprise entre 20% et 40% du pas moyen P entre deux barrettes principales.

Ces barrettes secondaires s'étendent, de chaque côté du plan équatorial, axialement au-delà de l'extrémité axiale de la couche de travail de l'armature de sommet la plus large axialement.

En outre ce pneu est caractérisé en ce que :

- les barrettes principales et les barrettes secondaires comprennent dans la direction radiale (direction de l'épaisseur) une lentille formée dans un premier matériau, chaque lentille s'étendant axialement de part et d'autre de l'ensemble des extrémités axiales des couches de travail, chaque lentille étant surmontée par un deuxième matériau s'étendant à neuf jusqu'à la face de contact des barrettes principales et barrettes secondaires,

- le premier matériau formant une lentille dans chaque barrette principale et chaque barrette secondaire a un module visqueux G"1 et un module complexe G*1, ces modules étant mesurés à 60°C,

- le deuxième matériau dans chaque barrette principale et chaque barrette secondaire a un module visqueux G"2 et un module complexe G*2, ces modules étant mesurés à 60°C.

Ces modules satisfont les relations suivantes :

- le module visqueux G" 1 du premier matériau est au plus égal à 60% du module visqueux G"2 du deuxième matériau ;

- le module complexe G*1 du premier matériau est différent du module complexe G*2 du deuxième matériau, l'écart entre ces modules complexes étant au plus égal à 30% du module complexe G*2 du deuxième matériau.

Grâce à cette construction, il est possible de réduire sensiblement les sollicitations mécaniques sur les barrettes principales dans une région localisée axialement sur et de part et d'autre des extrémités des couches de travail et cela même après un usage prolongé.

Préférentiellement, le module complexe G*1 du premier matériau formant les lentilles est inférieur au module complexe G*2 du deuxième matériau.

Préférentiellement, la lentille dans chaque barrette s'étend sur toute la longueur de la barrette qu'elle soit principale ou secondaire.

Dans un autre mode de construction, les lentilles recouvrant les extrémités axiales de la deuxième couche de travail sont prolongées vers le plan médian équatorial pour s'étendre sur toute la largeur de la bande de roulement.

Dans une variante avantageuse, l'épaisseur de premier matériau constituant la lentille dans chaque barrette principale ou secondaire est - dans sa partie la plus épaisse - au moins égale à 20% et au plus égale à 60% de l'épaisseur de chaque barrette.

Dans une variante avantageuse, l'épaisseur maximale de premier matériau dans les barrettes secondaires est supérieure à l'épaisseur maximale de premier matériau dans les barrettes principales. L'écart est préférentiellement au moins égal à 4%.

La différence des longueurs des barrettes principales et secondaires est on le constate compensée par la présence de lentilles de hauteurs différentes dans chacune desdites barrettes.

Avantageusement, le taux de creux surfacique de la partie centrale de la bande de roulement, cette partie centrale étant délimitée axialement par des plans perpendiculaires à l'axe de rotation et passant par les extrémités axiales des barrettes secondaires situées de part et d'autre du plan médian équatorial est au moins égal à 60% et au plus égal à 70%. En combinaison avec le taux de creux surfacique de la partie centrale qui vient d'être défini, le taux de creux surfacique des parties de bord de la bande de roulement situées axialement à l'extérieur de la partie centrale est avantageusement compris entre 40% et 55%.

Avantageusement, l'écart entre le taux de creux surfacique de la partie centrale et le taux de creux surfacique de chaque partie de bord est au moins égal à 15%.

D'autres caractéristiques et avantages de l'invention ressortent de la description faite ci-après en référence au dessin annexé qui montre, à titre d'exemple bien entendu non limitatif, une forme de réalisation de l'objet de l'invention.

*BREVE DESCRIPTION DES FIGURES*

La figure 1 montre une vue partielle de la surface de roulement de la bande de roulement du pneu selon l'invention ;

La figure 2 montre une coupe matérialisée par le tracé II-II d'une barrette principale du pneu de la figure 1 ;

La figure 3 montre une coupe réalisée selon un plan de coupe dont la trace est figurée sur la figure 1 par la ligne III-III, cette coupe coupant à la fois une barrette principale et une barrette secondaire.

*DESCRIPTION DES FIGURES*

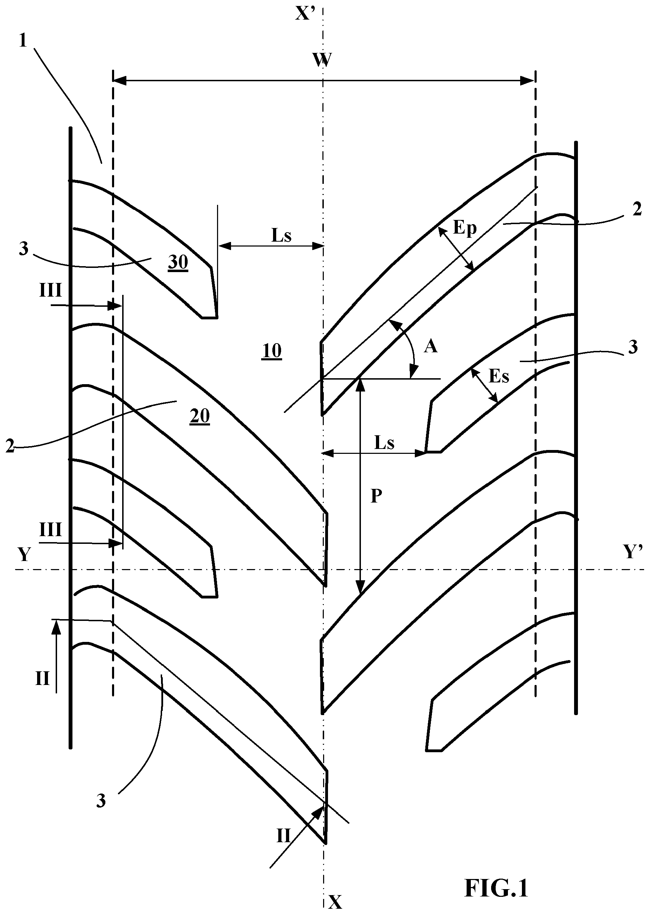

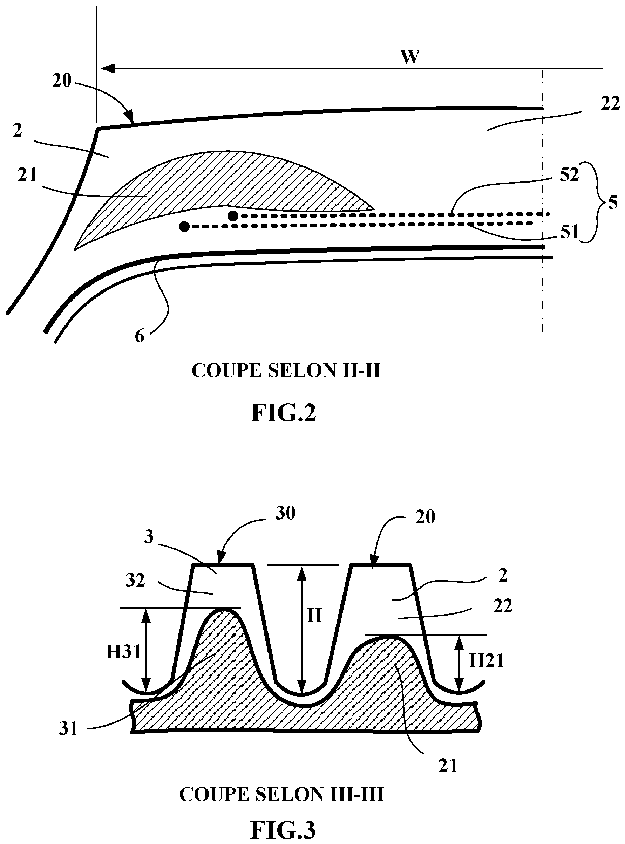

Il est ici décrit un pneu 1 selon l'invention, ce pneu de dimension **1000/55 R 32** étant destiné à l'équipement d'un engin agricole polyvalent. La figure 1 montre une vue partielle de la surface de roulement de la bande de roulement. Cette bande de roulement 11 a une largeur W égale à 1003 mm, cette largeur correspondant à la largeur de contact sur sol plan pour des conditions d'usage en pression et charge telles que définies dans les standards. Cette bande de roulement recouvre une armature de sommet formée dans le cas présent par l'empilement de deux couches comme cela est montré avec la figure 2.

Un plan médian équatorial divise la bande de roulement en deux parties d'égales largeurs. Ce plan coupe le plan de la figure 1 selon la ligne XX'.

Comme on peut le voir sur cette figure 1, la bande de roulement 1 comprend une surface portante 10 sur laquelle sont moulées de chaque côté du plan médian équatorial XX' une pluralité de barrettes principales 2, ces barrettes principales 2 faisant un angle moyen A différent de zéro avec la direction axiale YY' du pneu. Ces barrettes principales 2 sont disposées autour du pneu avec un pas moyen P égal à 422 mm. Chaque barrette principale 2 s'étend d'une limite axiale de la bande de roulement jusqu'au plan moyen équatorial XX' de manière à former un motif en V, la pointe de ce motif en V étant destinée à rentrer en premier dans le contact avec un sol pendant le roulage.

Chaque barrette principale 2 a une face de contact 20 coupant des faces latérales, ces dernières prenant naissance sur la surface portante 10 de la bande de roulement. Chaque barrette principale 2 a une largeur minimale moyenne Ep définie comme la largeur moyenne sur la longueur de la barrette principale qui est égale dans le cas présenté à 81 mm. Chaque barrette principale 2 a une hauteur Hp mesurée par rapport à la surface portante 10 égale à 40 mm.

Cette bande de roulement 1 comprend en outre de chaque côté du plan médian équatorial XX' une pluralité de barrettes secondaires 3 s'étendant entre une limite axiale externe de la bande de roulement et une largeur Ls égale à 285 mm (cette largeur Ls étant comptée à partir du plan médian XX'), chaque barrette secondaire 3 intercalée entre deux barrettes principales 2 a une largeur moyenne Es égale à 59 mm.

Les barrettes principales 2 et secondaires 3 comme on peut l'appréhender sur la figure 2 s'étendent axialement au-delà de l'extrémité de la couche de travail la plus large axialement.

Sur la figure 2, montrant une coupe le long d'une barrette principale 2, on distingue le profil de la lentille 21 formée dans un premier matériau enveloppé dans une partie complémentaire 22 formée dans un deuxième matériau, cette partie complémentaire 22 prolongeant radialement vers l'extérieur la lentille 21 jusqu'à la surface de roulement 20 de la barrette principale 2 à neuf. En outre, cette partie complémentaire 22 enveloppe latéralement la lentille 21 jusqu'aux faces latérales de la barrette principale.

La même configuration se retrouve dans chaque barrette secondaire 3 comme on peut le constater sur la figure 3 montrant une coupe traversant à la fois une barrette principale 2 et une barrette secondaire 3. Chaque barrette secondaire 3 comprend une lentille 31 surmontée par une partie complémentaire 32 jusqu'à la face de contact 30 de la barrette secondaire 3.

Chaque lentille 21, 31, que ce soit dans les barrettes principales 2 ou dans les barrettes secondaires 3, s'étend axialement de part et d'autre de l'ensemble des extrémités axiales des couches de travail 51, 52.

Le premier matériau formant une lentille dans chaque barrette principale et chaque barrette secondaire a un module visqueux G"1 et un module complexe G*1, et le deuxième matériau dans chaque barrette principale et chaque barrette secondaire a un module visqueux G"2 et un module complexe G*2.

Ces modules satisfont les relations suivantes :

- A 60°C, le module visqueux G" 1 du premier matériau est égal à 0.4MPa tandis que le module visqueux G"2 du deuxième matériau est égal à 0.96MPa.

- A 60°C, le module complexe G*1 du premier matériau est égal à 1.31 MPa et le module complexe G*2 du deuxième matériau est égal à 1.62 MPa.

Avec la figure 3, il est montré que la lentille 21 formée dans chaque barrette principale 2 s'étend radialement moins haut que la lentille 31 formée dans chaque barrette secondaire 3 de manière à faire apparaitre par usure les lentilles 31 formées dans les barrettes secondaires 3 sur la surface de roulement et permettre son contact avec la chaussée avant les lentilles 21 formées dans les barrettes principales 2. De cette façon il est possible d'équilibrer le fonctionnement des barrettes principales et des barrettes secondaires.

L'épaisseur maximale H31 de la lentille 31 dans les barrettes secondaires 3 est supérieure à l'épaisseur maximale H21 de la lentille 21 formée dans les barrettes principales 2. Dans le cas présent, la hauteur H31 est supérieure à 42% de la hauteur totale H de la barrette secondaire 3 tandis que la hauteur H21 est au plus égale à 40% de la hauteur totale H de la barrette principale 2 (les barrettes principales et secondaires ont la même hauteur H).

Dans l'exemple décrit, le taux de creux surfacique de la partie centrale de la bande de roulement, cette partie étant délimitée axialement par deux plans perpendiculaires à l'axe de rotation et passant par les extrémités axiales des barrettes secondaires 3 situées de part et d'autre du plan médian équatorial, est égal à 66%. En combinaison, le taux de creux surfacique des bords de la bande de roulement, c'est à dire des parties de la bande de roulement comprenant à la fois les barrettes principales et les barrettes secondaires est égal à 50%.

L'invention décrite au moyen de ces deux exemples ne saurait être limitée à ces seules variantes et diverses modifications peuvent y être apportées tout en restant dans le cadre tel que défini par les revendications. Notamment, l'étendue dans la direction axiale de chacune des lentilles formées dans les barrettes principales ou secondaires.

**Revendications**

1.  - Pneu pour engin agricole comprenant une bande de roulement (1) de largeur W surmontant une armature de sommet (5), cette armature de sommet surmontant une armature de carcasse (6) et comprenant une pluralité de couches de travail (51, 52) formée chacune par une pluralité de renforts orientés avec un même angle moyen par rapport à la direction circonférentielle et croisés d'une couche à la suivante, cette bande de roulement (1) ayant une surface portante (10) sur laquelle sont formées de chaque côté du plan médian équatorial (XX') une pluralité de barrettes principales (3) disposées autour du pneu avec un pas moyen P, ces barrettes principales (3) étant orientées selon un angle moyen (A) différent de zéro avec la direction axiale du pneu, cet angle moyen étant défini comme l'angle d'une droite passant par les points d'extrémité d'une barrette principale, ces barrettes principales s'étendant d'un bord de la bande de roulement jusqu'au plan médian équatorial de manière à former un motif en V, la pointe de ce motif en V étant destinée à rentrer en premier dans le contact avec un sol pendant le roulage, ces barrettes principales (3) s'étendent, de chaque côté du plan équatorial, axialement au-delà de l'extrémité axiale de la couche de travail (51) de l'armature de sommet (5) la plus large axialement, cette bande de roulement (1) comprenant en outre de chaque côté du plan médian équatorial une pluralité de barrettes secondaires (3) s'étendant, de chaque côté du plan médian équatorial, entre une limite axiale de la bande de roulement et une limite axiale distante du plan médian équatorial d'une largeur Ls comprise entre 40% et 60% de la demi largeur (W/2) de la bande de roulement, chaque barrette secondaire (3) étant intercalée entre deux barrettes principales (2) et ayant une largeur moyenne Es comprise entre 20% et 40% du pas moyen P entre deux barrettes principales (2), chaque barrette secondaire (3) s'étendant axialement au-delà de l'extrémité axiale de la couche de travail (51) de l'armature de sommet la plus large axialement, ce pneu étant **caractérisé en ce que** :

- les barrettes principales (2) et les barrettes secondaires (3) comprennent, dans la direction radiale, une lentille (21, 31) formée dans un premier matériau, chaque lentille s'étendant axialement de part et d'autre de l'ensemble des extrémités axiales des couches de travail (51, 52), chaque lentille (21, 31) étant surmontée par un deuxième matériau s'étendant à neuf jusqu'à la face de contact des barrettes principales et des barrettes secondaires,

- le premier matériau formant une lentille dans chaque barrette principale et chaque barrette secondaire a un module visqueux G"1 et un module complexe G*1, ces modules étant mesurés pour une sollicitation sinusoïdale en cisaillement simple alterné, à la fréquence de 10 Hz et à une température de 60°C,

- le deuxième matériau dans chaque barrette principale et chaque barrette secondaire a un module visqueux G"2 et un module complexe G*2, ces modules étant mesurés pour une sollicitation sinusoïdale en cisaillement simple alterné, à la fréquence de 10 Hz et à une température de 60°C,

- ces modules satisfaisant les relations suivantes :

- le module visqueux G"1 du premier matériau est au plus égal à 60% du module visqueux G"2 du deuxième matériau,

- le module complexe G*1 du premier matériau est différent du module complexe G*2 du deuxième matériau, l'écart entre ces modules complexes étant au plus égal à 30% du module complexe G*2 du deuxième matériau.

2.  - Pneu selon la revendication 1 **caractérisé en ce que** le module complexe G*1 du premier matériau formant une lentille dans chaque barrette principale et chaque barrette secondaire est inférieur au module complexe G*2 du deuxième matériau.

3. - Pneu selon la revendication 1 ou la revendication 2 **caractérisé en ce que** la lentille (21, 31) respectivement dans chaque barrette principale (2) et secondaire (3) s'étend sur toute la longueur de ladite barrette.

4. - Pneu selon l'une des revendications 1 à 3 **caractérisé en ce que** le matériau formant les lentilles (21, 31) recouvrant les extrémités axiales de la deuxième couche de travail (52) est prolongé vers le plan médian équatorial pour s'étendre sur toute la largeur W de la bande de roulement.

5. - Pneu selon l'une des revendications 1 à 4 **caractérisé en ce que** l'épaisseur du premier matériau constituant la lentille (21, 31) dans chaque barrette principale ou secondaire est, dans sa partie la plus épaisse, au moins égale à 20% et au plus égale à 60% de l'épaisseur de chaque barrette.

6. - Pneu selon l'une des revendications 1 à 5 **caractérisé en ce que** l'épaisseur maximale de lentille (21) dans les barrettes secondaires (3) est supérieure à l'épaisseur maximale de lentille (31) dans les barrettes principales (2).

7. - Pneu selon l'une des revendications 1 à 6 **caractérisé en ce que** le taux de creux surfacique de la partie centrale de la bande de roulement, cette partie centrale étant délimitée axialement par des plans perpendiculaires à l'axe de rotation et passant par les extrémités axiales des barrettes secondaires (3) situées de part et d'autre du plan médian équatorial est au moins égal à 60% et au plus égal à 70%, le taux de creux surfacique des parties de bord de la bande de roulement situées axialement à l'extérieur de la partie centrale étant compris entre 40% et 55%.

8. - Pneu selon la revendication 7 **caractérisé en ce que** l'écart entre le taux de creux surfacique de la partie centrale et des parties de bord de la bande de roulement est au moins égal à 15%.

**Patentansprüche**

1. Reifen für eine landwirtschaftliche Maschine, umfassend einen Laufstreifen (1) mit einer Breite W, der über einer Scheitelbewehrung (5) liegt, wobei die Scheitelbewehrung über einer Karkassenbewehrung (6) liegt und mehrere Arbeitsschichten (51, 52) umfasst, die jeweils durch mehrere Verstärkungen ausgebildet sind, die mit demselben mittleren Winkel in Bezug auf die Umfangsrichtung ausgerichtet sind und sich von einer Schicht zur nächsten kreuzen, wobei der Laufstreifen (1) eine Tragfläche (10) aufweist, auf der zu beiden Seiten der äquatorialen Mittelebene (XX') mehrere Hauptstollen (3) ausgebildet sind, die mit einem mittleren Abstand P um den Reifen herum ausgebildet sind, wobei die Hauptstollen (3) in einem von Null verschiedenen mittleren Winkel (A) zur axialen Richtung des Reifens ausgerichtet sind, wobei der mittlere Winkel als der Winkel einer durch die Endpunkte eines Hauptstollens verlaufenden Geraden definiert ist, wobei sich die Hauptstollen von einem Rand des Laufstreifens bis zur äquatorialen Mittelebene erstrecken, so dass sie ein V-förmiges Muster bilden, wobei die Spitze des V-förmigen Musters dazu bestimmt ist, beim Rollen als Erste mit dem Boden in Kontakt zu kommen, wobei sich die Hauptstollen (3) zu beiden Seiten der äquatorialen Ebene axial über das axiale Ende der axial breitesten Arbeitsschicht (51) der Scheitelbewehrung (5) hinaus erstrecken, wobei der Laufstreifen (1) ferner zu beiden Seiten der äquatorialen Mittelebene mehrere Sekundärstollen (3) umfasst, die sich zu beiden Seiten der äquatorialen Mittelebene zwischen einer axialen Grenze des Laufstreifens und einer axialen Grenze, die mit einer Breite Ls zwischen 40 % und 60 % der halben Breite (W/2) des Laufstreifens von der äquatorialen Mittelebene entfernt ist, erstrecken, wobei jeder Sekundärstollen (3) zwischen zwei Hauptstollen (2) eingefügt ist und eine mittlere Breite Es zwischen 20 % und 40 % des mittleren Abstands P zwischen zwei Hauptstollen (2) aufweist, wobei sich jeder Sekundärstollen (3) axial über das axiale Ende der axial breitesten Arbeitsschicht (51) der Scheitelbewehrung hinaus erstreckt,
wobei der Reifen **dadurch gekennzeichnet ist, dass**:

- die Hauptstollen (2) und die Sekundärstollen (3) in der radialen Richtung eine Linse (21, 31) umfassen, die aus einem ersten Material ausgebildet ist, wobei sich jede Linse axial zu beiden Seiten aller axialen Enden der Arbeitsschichten (51, 52) erstreckt, wobei über jeder Linse (21, 31) ein zweites Material liegt, das sich im Neuzustand bis zur Kontaktfläche der Hauptstollen und der Sekundärstollen erstreckt,
- das erste Material, das in jedem Hauptstollen und jedem Sekundärstollen eine Linse ausbildet, einen Viskositätsmodul G"1 und einen komplexen Modul G*I aufweist, wobei die Module bei einer sinusförmigen Belastung mit einfacher alternierender Scherung bei einer Frequenz von 10 Hz und einer Temperatur von 60 °C gemessen werden,
- das zweite Material in jedem Hauptstollen und jedem Sekundärstollen einen Viskositätsmodul G"2 und einen komplexen Modul G*2 aufweist, wobei die Module bei einer sinusförmigen Belastung mit einfacher alternierender Scherung bei einer Frequenz von 10 Hz und einer Temperatur von 60 °C gemessen werden,

- wobei die Module die folgenden Beziehungen erfüllen:
- der Viskositätsmodul G"1 des ersten Materials beträgt höchstens 60 % des Viskositätsmoduls G"2 des zweiten Materials,
- der komplexe Modul G*1 des ersten Materials unterscheidet sich vom komplexen Modul G*2 des zweiten Materials, wobei die Differenz zwischen den komplexen Modulen höchstens 30 % des komplexen Moduls G*2 des zweiten Materials beträgt.

2. Reifen nach Anspruch 1, **dadurch gekennzeichnet, dass** der komplexe Modul G*1 des ersten Materials, das eine Linse in jedem Hauptstollen und jedem Sekundärstollen ausbildet, kleiner als der komplexe Modul G*2 des zweiten Materials ist.

3. Reifen nach Anspruch 1 oder Anspruch 2, **dadurch gekennzeichnet, dass** sich die Linse (21, 31) jeweils in jedem Hauptstollen (2) und Sekundärstollen (3) über die gesamte Länge des Stollens erstreckt.

4. Reifen nach einem der Ansprüche 1 bis 3, **dadurch gekennzeichnet, dass** das Material, das die Linsen (21, 31) ausbildet, die die axialen Enden der zweiten Arbeitsschicht (52) bedecken, in Richtung der äquatorialen Mittelebene verlängert ist, um sich über die gesamte Breite W des Laufstreifens zu erstrecken.

5. Reifen nach einem der Ansprüche 1 bis 4, **dadurch gekennzeichnet, dass** die Dicke des ersten Materials, das die Linse (21, 31) in jedem Hauptstollen bzw. Sekundärstollen, ausbildet, an ihrer dicksten Stelle mindestens 20 % und höchstens 60 % der Dicke jedes Stollens beträgt.

6. Reifen nach einem der Ansprüche 1 bis 5, **dadurch gekennzeichnet, dass** die maximale Dicke der Linse (21) in den Sekundärstollen (3) größer als die maximale Dicke der Linse (31) in den Hauptstollen (2) ist.

7. Reifen nach einem der Ansprüche 1 bis 6, **dadurch gekennzeichnet, dass** der oberflächenbezogene Hohlraumanteil des Mittelabschnitts des Laufstreifens mindestens 60 % und höchstens 70 % beträgt, wobei der Mittelabschnitt axial durch Ebenen begrenzt ist, die senkrecht zur Drehachse sind und durch die axialen Enden der zu beiden Seiten der äquatorialen Mittelebene befindlichen Sekundärstollen (3) verlaufen, wobei der oberflächenbezogene Hohlraumanteil der axial außerhalb des Mittelabschnitts befindlichen Randbereiche zwischen 40 % und 55 % beträgt.

8. Reifen nach Anspruch 7 **dadurch gekennzeichnet, dass** die Differenz zwischen dem oberflächenbezogenen Hohlraumanteil des Mittelteils und der Randabschnitte des Laufstreifens mindestens 15 % beträgt.

## Claims

1. - Tyre for an agricultural vehicle, comprising a tread (1) of width W surmounting a crown reinforcement (5), this crown reinforcement surmounting a carcass reinforcement (6) and comprising a plurality of working layers (51, 52) each formed by a plurality of reinforcers that are oriented at one and the same mean angle with respect to the circumferential direction and are crossed from one layer to the next, this tread (1) having a bearing surface (10) on which a plurality of main lugs (3) that are disposed around the tyre at a mean spacing P are formed on each side of the equatorial mid-plane (XX'), these main lugs (3) being oriented at a mean angle (A) other than zero to the axial direction of the tyre, this mean angle being defined as the angle of a straight line passing through the end points of a main lug, these main lugs extending from an edge of the tread as far as the equatorial mid-plane so as to form a V-shaped pattern, the tip of this V-shaped pattern being intended to come into contact with the ground first during running, these main lugs (3) extending, on each side of the equatorial plane, axially beyond the axial end of the working layer (51) of the axially widest crown reinforcement (5), this tread (1) also comprising, on each side of the equatorial mid-plane, a plurality of secondary lugs (3) that extend, on each side of the equatorial mid-plane, between an axial limit of the tread and an axial limit at a distance from the equatorial mid-plane by a width Ls of between 40% and 60% of the half-width (W/2) of the tread, each secondary lug (3) being interposed between two main lugs (2) and having a mean width Es of between 20% and 40% of the mean spacing P between two main lugs (2), each secondary lug (3) extending axially beyond the axial end of the working layer (51) of the axially widest crown reinforcement, this tyre being **characterized in that:**

   - the main lugs (2) and the secondary lugs (3) comprise, in the radial direction, a lens (21, 31) made of a first material, each lens extending axially on either side of the set of axial ends of the working layers (51, 52), each lens (21, 31) being surmounted by a second material that extends, in the new state, as far as the contact face of the main lugs and the secondary lugs,
   - the first material forming a lens in each main lug and each secondary lug has a viscous modulus G"1 and a complex modulus G*1, these moduli being measured to a simple alternating sinusoidal shear stress loading at a frequency of 10 Hz and at a temperature of 60°C,

- the second material in each main lug and each secondary lug has a viscous modulus G"2 and a complex modulus G*2, these moduli being measured to a simple alternating sinusoidal shear stress loading at a frequency of 10 Hz and at a temperature of 60°C,

- these moduli satisfying the following relationships:

- the viscous modulus G"1 of the first material is at most equal to 60% of the viscous modulus G"2 of the second material,

- the complex modulus G*1 of the first material is different from the complex modulus G*2 of the second material, the difference between these complex moduli being at most equal to 30% of the complex modulus G*2 of the second material.

**2.** - Tyre according to Claim 1, **characterized in that** the complex modulus G*1 of the first material forming a lens in each main lug and each secondary lug is less than the complex modulus G*2 of the second material.

**3.** - Tyre according to Claim 1 or Claim 2, **characterized in that** the respective lenses (21, 31) in each main lug (2) and secondary lug (3) extend along the entire length of said lug.

**4.** - Tyre according to one of Claims 1 to 3, **characterized in that** the material forming the lenses (21, 31) covering the axial ends of the second working layer (52) is continued towards the equatorial mid-plane so as to extend across the entire width W of the tread.

**5.** - Tyre according to one of Claims 1 to 4, **characterized in that** the thickness of the first material constituting the lens (21, 31) in each main or secondary lug is, in its thickest part, at least equal to 20% and at most equal to 60% of the thickness of each lug.

**6.** - Tyre according to one of Claims 1 to 5, **characterized in that** the maximum thickness of the lens (21) in the secondary lugs (3) is greater than the maximum thickness of the lens (31) in the main lugs (2).

**7.** - Tyre according to one of Claims 1 to 6, **characterized in that** the surface void ratio of the central part of the tread, this central part being delimited axially by planes perpendicular to the axis of rotation and passing through the axial ends of the secondary lugs (3) situated on either side of the equatorial mid-plane, is at least equal to 60% and at most equal to 70%, the surface void ratio of the edge parts of the tread that are situated axially on the outside of the central part being between 40% and 55%.

**8.** - Tyre according to Claim 7, **characterized in that** the difference between the surface void ratio of the central part and of the edge parts of the tread is at least equal to 15%.

FIG.1

20
2
21

W

22

52
5
51

6

**COUPE SELON II-II**

**FIG.2**

30    20
3
32                    2
22
H
H31            H21
31
21

**COUPE SELON III-III**

**FIG.3**

**RÉFÉRENCES CITÉES DANS LA DESCRIPTION**

**Documents brevets cités dans la description**

- US 4383567 A
- US 4534392 A
- US 5046541 A
- US 5411067 A